# EUROPÄISCHE PATENTSCHRIFT

(11) **EP 2 650 058 B1**
(45) Veröffentlichungstag und Bekanntmachung des Hinweises auf die Patenterteilung: **11.03.2020**
(21) Anmeldenummer: 13001755.1
(22) Anmeldetag: 05.04.2013
(51) Int. Cl.: B09B 3/00, C22B 7/00

(54) **Verfahren zur Inertisierung von metallischem Aluminium sowie anderen unedlen metallischen Phasen**
Method for the inertisation of metallic aluminium and other non-noble metal phases
Procédé d'inertisation d'aluminium métallique ainsi que d'autres phases métalliques communes

(30) Priorität: 13.04.2012 AT 4462012
(43) Veröffentlichungstag der Anmeldung: 16.10.2013
(73) Patentinhaber: Andritz AG, 8045 Graz (AT)
(72) Erfinder: Fraissler, Gerald, A-8043 Graz (AT); Kaufmann, Kurt, A-8793 Gai (AT); Kaiser, Sebastian, A-1190 Wien (AT); Jaritz, Günter, A-8010 Graz (AT)

(56) Entgegenhaltungen:
- EP-A2- 1 167 556
- WO-A1-92/12268
- DE-A1-102006 056 480
- JP-A- 2001 192 740
- JP-A- 2006 346 520

## Beschreibung

Die Erfindung betrifft ein Verfahren, in dem reaktives metallisches Aluminium sowie andere unedle metallische Phasen in Aschen oder anorganischen Abfällen aus Verbrennungsprozessen oder anderen insbesondere thermischen, chemischen, mechanischen Prozessen mittels Verringerung des Anteils in der Asche bzw. im Abfall durch Oxidation und Hydratation inertisiert werden, um gefährliche Reaktionen im nachfolgenden Handling und in der Entsorgung zu vermeiden.

Schlacken, Flugaschen, Stäube und Reaktionsprodukte aus der Verbrennung, insbesondere von Ersatzbrennstoff (EBS) verfeuernden Wärmekraftwerken, weisen hohe Anteile an unedlen metallischen Phasen auf. Es können natürlich auch andere Abfallstoffe aus der Metallindustrie, - verarbeitung sowie der Gesteinshüttenindustrie wie z.B. Schlacken, Krätzen, Stäube behandelt werden. Abhängig von den gesetzlichen Auflagen ist ihre derzeitige Entsorgung hinsichtlich Ober- und/oder Untertagedeponierung für Anlagenbetreiber oft sehr kostenintensiv.

Ein Hauptproblem bei der Deponierung von mit unedlen Metallen kontaminierten Abfällen aus thermischen, chemischen, mechanischen Prozessen, insbesondere Verbrennungsaschen, ist das hohe Freisetzungspotenzial von gasförmigem Wasserstoff bei Befeuchtung. Ein weiteres Problem bei der Deponierung stellen insbesondere chloridische Salze dar, die sich einerseits leicht lösen und andererseits unter geeigneten Bedingungen und Vorhandensein von Reaktionspartnern giftige Chlor-Verbindungen bilden können.

Ein Verfahren zur Immobilisierung von Verbrennungsrückständen ist z.B. aus der WO 03/008045 A2 bekannt. Hier werden u.a. Aschen aus einer Verbrennung nasschemisch behandelt und nach einer mechanischen Entwässerung deponiert. Die Probleme der Freisetzung von Wasserstoff und/oder giftigen Chlor-Verbindungen bleiben hier jedoch bestehen, insbesondere da hier auch keine Inertisierung erfolgt.

Ein weiteres Verfahren zur Inertisierung gemäß der WO 96/03181 führt der Asche jedoch Wasser zu, so dass hier gerade das Problem der Freisetzung von Wasserstoff unterstützt wird.

Im Verfahren nach der US 6132355 A1 wird Asche zunächst mit Wasser gemischt und ein pH-Wert zwischen 9,5 und 14 eingestellt, wodurch wasserlösliche Salze gelöst und abfiltriert werden sollen. Die Einstellung des pH-Werts erfolgt mit Salzsäure oder Natriumhydroxid. Durch die alkalischen Prozessbedingungen während diesem Laugungsschritt wird durch vorhandenes, reaktives Aluminium explosionsgefährlicher Wasserstoff freigesetzt, der den Prozess schwer beherrschbar macht und stark erhöhte Sicherheits- und Überwachungsmaßnahmen erfordert. Nach einer mechanischen Entwässerung werden Wasser und Phosphorsäure oder Alkali(hexameta)phosphate beigemengt, um vorhandene metallische Aluminiumpartikel durch Bildung einer äußeren Passivschicht aus Aluminium(hexameta)phosphat zu inertisieren/stabilisieren. Das Innere dieser Partikel bleibt aber weiterhin metallisch und kann durch Fehler in der Gitterstruktur der Passivschicht und/oder durch ihre zu dünne Ausbildung weiterhin chemisch angegriffen werden. Das Problem der Freisetzung von Wasserstoff aus metallischem Aluminium bleibt vermutlich auch nach diesem Schritt erhalten. Ein allfälliger Kalzinierschritt dient dazu, organische Verunreinigungen und unverbrannte Reststoffe zu entfernen bzw. unschädlich zu machen. Bei Vorhandensein hoher Anteile von metallischen Kontaminationen insbesondere von Aluminium besteht hier die Gefahr eines Metallbrandes infolge von Thermitreaktionen. Die wiederholte Wasserzugabe in Kombination mit einem hydraulischen Binder sowie Pelletierung in einer Drehtrommel soll der Stabilisierung gegenüber chemischem Angriff und Auswaschung auf der Deponie dienen. Hier besteht das Problem, dass gebildeter Zementstein durch die Versauerung der Deponiebedingungen infolge von Karbonatisierungsreaktionen und Eintrag von Huminsäuren zerstört wird und eingeschlossene Schadstoffe wieder freigesetzt werden. Die vielen aufgezeigten Prozessschritte dieses Verfahrens machen, neben den aufgezeigten Problemen, insbesondere der gefährlichen Freisetzung von Wasserstoff im Laugungsschritt, das Verfahren apparativ sehr aufwändig sowie schwer beherrschbar. Weiters beschreibt die EP 1 167 556 A2 ein Verfahren zum Herauslösen von metallischem Aluminium aus aluminiumhaltigen, festen Abfällen. Auchhier wird wie bei den oben genannten Dokumenten WO 96/03181 A und US 6132355 A Wasser zugegeben und somit unerwünschter und gefährlicher Wasserstoff erzeugt.

Ziel der Erfindung ist daher ein Verwertungsverfahren zur Inertisierung von vorhandenem metallischen Aluminium und anderen unedlen metallischen Phasen in Abfällen aus thermischen, chemischen oder mechanischen Prozessen, insbesondere Verbrennungsaschen zu schaffen. Besonderes Augenmerk ist daneben auf die Inertisierung von löslichen Problemstoffen, im Besonderen Chloride und Schwermetalle, gerichtet. Dieses Verfahren soll auch unter wirtschaftlichem Aspekt (Investitions-, Betriebs-, Entsorgungskosten hinsichtlich Transport und Deponierung) vorteilhaft einsetzbar sein.

Die Erfindung betriffe ein Verfahren nach Anspruch 1, wobei der Verbrennung oder dem thermischen, chemischen oder mechanischen Prozess eine nasschemische Behandlung nachgeschaltet ist, wobei die nasschemische Behandlung unter alkalischen Bedingungen mit pH-Werten größer 11 erfolgt und die erforderliche Alkalität von pH größer 11 über gezielte Zugabe in einen Mischer/Kneter von alkalisch wirkenden Reaktionschemikalien wie z.B. Base oder Lauge eingestellt wird, dadurch gekennzeichnet, dass Nitrat zugegeben und dadurch Ammoniak anstelle des hoch explosionsgefährlichen Wasserstoffs gebildet wird. Die Alkalität kann über alkalische wirkende Reaktionschemikalien wie Wasserglas oder auch industrielle alkalische Abfallstoff, z.B. Rotschlamm, oder Nitrat eingestellt werden. Durch diese nasschemische Behandlung wird der Anteil an vorhandenem metallischen Aluminium und anderen unedlen metallischen Phasen durch Hydratation verringert und so die Bildung von explosionsgefährlichem, gasförmigen Wasserstoff auf der Deponie bei Befeuchtung sowie Thermitreaktionen verhindert.

Eine vorteilhafte Ausgestaltung der Erfindung ist dadurch gekennzeichnet, dass der eingestellte Wassergehalt von der Abfallbeschaffenheit sowie der für die Inertisierung erforderlichen Art und Zugabemengen an Reaktionschemikalien abhängig ist.

Besonders vorteilhaft hat sich erwiesen, wenn Spülgas im Unterdruckbetrieb eingesetzt wird, wobei bei verbundenen Anlagen die Verwendung von Rauchgas/Prozessgas mit einem möglichst niedrigen Sauerstoffanteil besonders zweckmäßig ist.

Eine vorteilhafte Weiterbildung der Erfindung ist dadurch gekennzeichnet, dass der freigesetzte Wasserstoff bzw. das Ammoniak im Abgas energetisch oder prozesstechnisch wieder genutzt wird.

Eine günstige Ausgestaltung der Erfindung ist dadurch gekennzeichnet, dass der nasschemischen Behandlung eine Stückigmachung, beispielsweise Granulierung, nachgeschaltet ist, um ein unkontrolliertes Abbinden von durch den Reaktionsmechanismus in der Abfallmatrix gebildeten mineralischen Bindemittelphasen zu verhindern.

Eine vorteilhafte Weiterbildung der Erfindung ist dadurch gekennzeichnet, dass der nasschemischen Behandlung eine Kalzinierung nachgeschaltet ist, welche das Ziel hat, das für den Reaktionsmechanismus beigefügte Wasser abzuscheiden und schädliche nasschemisch initiierte Reaktionen hinsichtlich der weiteren Handhabung wieder zu unterbinden sowie Entsorgungskosten zu senken.

Die Erfindung wird nun anhand der Zeichnungen beispielhaft beschrieben, wobei
Fig. 1 ein Fliessbild des erfindungsgemäßen Verfahrens,
Fig. 2 ein mögliches Anlagenschema des erfindungsgemäßen Verfahrens bei einer Verbrennungsanlage,
Fig. 3 eine Variante von Verfahrensschritten gemäß dem erfindungsgemäßen Verfahren darstellt.

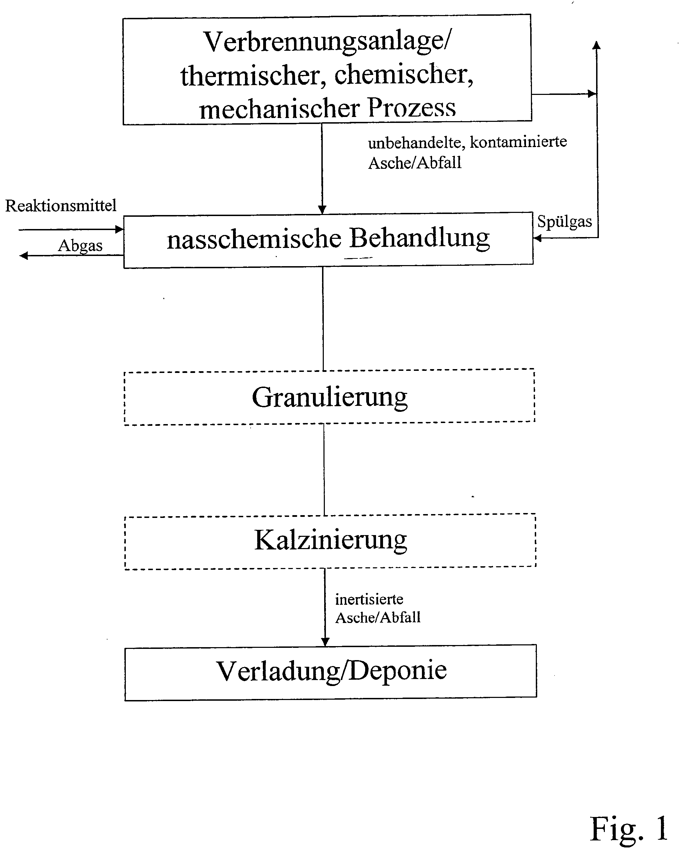

Fig. 1 zeigt schematisch das erfindungsgemäße Verfahren, wobei ausgehend von einem Verbrennungsprozess/thermischen, chemischen, mechanischen Prozess der dort anfallende Abfall/Asche, der mit unedlen metallischen Phasen, insbesondere metallischem Aluminium sowie mit löslichen Problemstoffen, wie z.B. Salzbildner (Chloride, Sulfate, etc.), Schwermetalle o.ä. belastet ist, einer nasschemischen Behandlung zugeführt wird. Primäres Ziel der nasschemischen Behandlung ist, vorhandenes, metallisches Aluminium und andere unedle metallische Phasen durch Hydratation weitgehend zu verringern. Damit soll die Bildung von explosionsgefährlichem, gasförmigen Wasserstoff später auf der Deponie verhindert werden, so dass somit auch die ansonsten erforderlichen Überwachungs- und Sicherheitsmassnahmen entfallen können.

Die nasschemische Behandlung wird vorzugsweise unter alkalischen Bedingungen durchgeführt. Gute Hydratations- und Oxidationsgeschwindigkeiten ergeben sich ab einem pH-Wert größer 11. Nach Anfall im Verbrennungsprozess/thermischen, chemischen, mechanischen Prozess wird beispielsweise der Abfall / die Asche einem gasdicht verschlossenen Mischer/Kneter aufgegeben.

Nach Anfall im Verbrennungsprozess/thermischen, chemischen, mechanischen Prozess wird beispielsweise der Abfall / die Asche einem gasdicht verschlossenen Mischer/Kneter aufgegeben. Der Mischer/Kneter arbeitet vorzugsweise nach dem kontinuierlichen bzw. quasi-kontinuierlichen Prinzip und bietet die Möglichkeit, einer intensiven Mischung und Homogenisierung. Die Zugabe der alkalisch wirkenden Reaktionsmittel z.B. Base, Nitrat, Wasserglas oder auch alkalische industrielle Abfallstoffe (z.B. Rotschlamm) und Wasser erfolgt idealerweise im Mischer bzw. kurz vor Aufgabe in den Mischer. Durch die Hydratation und Oxidation des Aluminiums bzw. der unedlen metallischen Phasen werden abhängig von deren Anteil in der Mischung hohe Mengen an Wasserstoff/Ammoniak freigesetzt. Entsprechend muss die Bildung einer explosiblen Atmosphäre im Mischer/Kneter und in seiner unmittelbaren Umgebung durch Gasspülung bzw. Inertisierung verhindert werden.

Die Menge an zugeführtem Spülgas orientiert sich am Brenngas- Sauerstoff-Verhältnis im Abgas aus der nasschemischen Behandlung und wird so gewählt, dass eine explosionsgefährliche Atmosphäre jedenfalls verhindert wird. Es müssen entsprechend Gasüberwachungsmessungen eingesetzt werden. Das verwendete Spülgas weist vorzugsweise einen niederen, bestenfalls keinen Sauerstoff-Anteil auf. Aus dem Verbrennungsprozess/ thermischen Prozess abgezweigtes Rauchgas/Abgas mit einem möglichst geringen Rest-Sauerstoffanteil kann daher für seine Verwendung in Betracht gezogen werden.

Um einen Gasaustritt in die Umgebung zu verhindern, soll zur weiteren Absicherung im Mischer/Kneter ein Unterdruck mittels eines Saugzugs hergestellt werden.

Das gebildete Abgas kann als Rezirkulationsgas dem Verbrennungsprozess/thermischen Prozess wieder zugeführt werden, um das erzeugte Brenngas energetisch nutzen zu können.

Der Vorteil des Einsatzes von Nitrat liegt in der Vermeidung von gefährlichem, explosionsgefährlichem Wasserstoff durch die Bildung des weit weniger gefährlichen Ammoniaks. Das gebildete Ammoniak kann gegebenenfalls zur Entstickung verwendet oder in anderen industriellen Prozessen (z.B. Düngemittelindustrie, Zellstoffindustrie etc.) verwertet werden. Ein zusätzlicher Nutzen des gebildeten Ammoniaks liegt in der Bindung und Abscheidung von Chlor, so dass auch eine teilweise Chlorreduktion erfolgt.

Ist die Beschaffenheit des Produktes aus der nasschemischen Behandlung für die weitere Handhabung hinsichtlich Förderung, Lagerung und Transport nicht geeignet, kann ein nachgeschalteter Schritt zur Stückigmachung/Granulierung eingesetzt werden.

Die nasschemische Behandlung von Verbrennungsaschen/Abfällen aus thermischen, chemischen, mechanischen Prozessen führt durch Vorhandensein von mineralischen Bindemittelphasen bei deren Hydratation zu Abbindereaktionen. Nach Beendigung der mechanischen Beanspruchung im Mischer/Kneter und Austrag besteht die Gefahr, dass bei weiterer Handhabung die feuchte thixotrope Mischung durch Kristallisation und/oder Polymerisation/Kondensation von hydratisierten Bindemittelphasen innerhalb kurzer Zeit unkontrolliert abbindet und eine feste Masse bildet. Ziel einer allfälligen nachfolgenden Stückigmachung/Granulierung ist daher eine in förder-, lager- und transporttechnischer Hinsicht optimale Formgebung und Formfestigkeit.

In einem möglichen darauf folgenden Schritt einer Kalzinierung, der auch direkt nach der nasschemischen Behandlung erfolgen kann, wird das bei der nasschemischen Behandlung zugesetzte Wasser wieder abgeschieden, um eine Gewichtsreduktion zur Senkung der Entsorgungskosten zu erreichen.

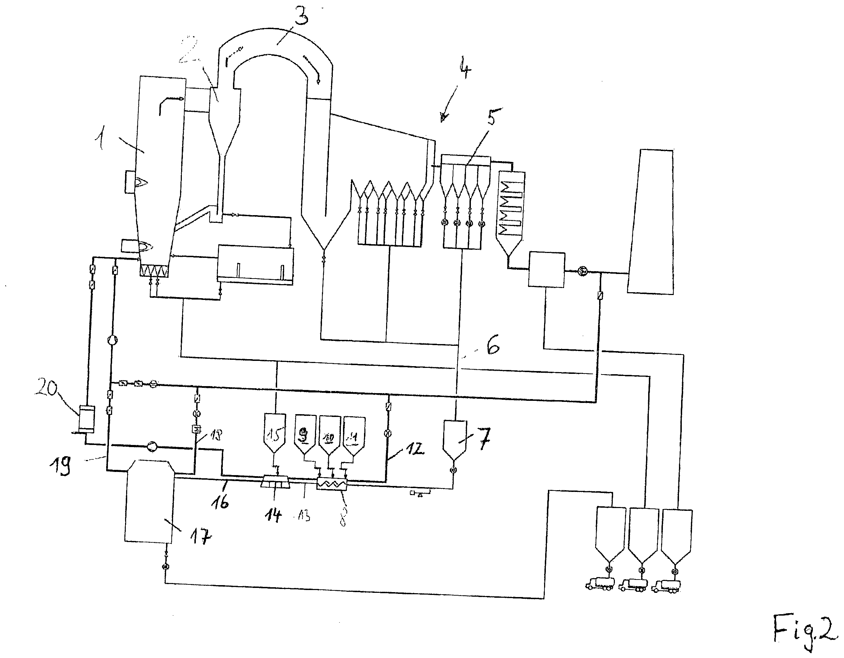

Fig. 2 zeigt ein vereinfachtes Anlagenschema zur Durchführung einer Variante des erfindungsgemäßen Verfahrens anhand einer Verbrennungsanlage. Die Verbrennungsanlage ist hier als zirkulierender Wirbelschichtkessel 1 mit Zyklon 2, Nachbrennkammer 3 sowie Staubabscheidern 4 inklusive Multizyklon 5 dargestellt. Die kontaminierte, unbehandelte Flugasche 6 wird über einen Pufferbehälter 7 in einen Mischer/Kneter 8 zur nasschemischen Behandlung geführt. Unter Zugabe von Wasser 9 und anderen alkalisch wirkenden Reaktionsmitteln wie hier z.B. dargestellt Basen 10 und/oder Nitrat 11 erfolgt hier die nasschemische Behandlung. Durch die Hydratation und Oxidation des metallischen Aluminiums oder der anderen unedlen metallischen Phasen werden abhängig von deren Anteil in der Flugasche Wasserstoff/Ammoniak freigesetzt. Entsprechend muss die Bildung einer explosiblen Atmosphäre im Mischer/Kneter 8 und in seiner unmittelbaren Umgebung durch Gasspülung verhindert werden. Ein weiterer Vorteil liegt in der Bildung von Ammoniak bei Reaktion mit naszendierendem Wasserstoff welcher in weiterer Folge Chlor bindet, so dass auch eine Chlorreduktion erfolgt. Durch die alkalisch wirkende Reaktion mit Nitrat wird wieder Base gebildet, so dass die anfängliche Zugabe von alkalisch wirkenden Reaktionsmitteln primär den Zweck hat, die Reaktionen zu starten. Daneben beeinflusst die Höhe der Zugabemenge die Hydratations- und Oxidationsgeschwindigkeit. Die notwendige Menge an zugeführtem Spülgas orientiert sich am Brenngas-Sauerstoff-Verhältnis im erzeugten Abgas, so dass eine explosible Atmosphäre jedenfalls verhindert wird. Es müssen entsprechend Gasüberwachungsmessungen eingesetzt werden. Das verwendete Spülgas weist vorzugsweise einen niederen, bestenfalls keinen Sauerstoff-Anteil auf. Aus dem Verbrennungsprozess abgezweigtes Rauchgas 12 mit einem möglichst geringen Rest-Sauerstoffanteil kann daher für seine Verwendung in Betracht gezogen werden. Das im Abgas enthaltene Brenngas wird zur energetischen Nutzung in die Brennkammer 1 rückgeführt. Ein vorgeschalteter Wäscher 20 dient zur Abscheidung von verwertbarem Ammoniak, welcher zur Entstickung im Verbrennungsprozess eingesetzt oder einer anderen Verwertung zugeführt werden kann.

Nach dem Mischer/Kneter 8 kann das Produkt 13 aus der nasschemischen Behandlung gegebenenfalls beispielsweise einem Granulator 14 zur Mischung und Formgebung zugeführt werden. In diesen Granulator 14 werden zur Stabilisierung zusätzlich Bindemittel 15 eingebracht. Durch eine in förder-, lager- und transporttechnischer Hinsicht optimale Formgebung/ Formfestigkeit kann erreicht werden, dass das Produkt aus der nasschemischen Behandlung mit thixotropen Eigenschaften aufgrund von hydratisierten Bindemittelphasen nicht unkontrolliert abbindet und eine feste Masse bildet, sondern weiterhin förderbar, lagerbar und transportierbar ist. Das Produkt 16 aus dem Granulationsschritt wird beispielhaft zusätzlich einem Kalzinierofen 17 zugeführt. Dies kann beispielsweise ein Etagenofen sein, wobei je Herd (Etage) die Prozessparameter Temperatur und Verweilzeit variiert werden können.

Die Beheizung des Kalzinierofens 17 erfolgt hier konvektiv mit Rauchgas 18 im Gegenstrom. Sie kann aber auch in Kombination mit anderen Trocknungsarten z.B. Strahlungstrocknung und Kontakttrocknung geschehen. Die Erfindung ist nicht auf den Einsatz eines Etagenofens beschränkt, vielmehr können auch äquivalente Thermoreaktoren mit entsprechenden Eigenschaften eingesetzt werden, wie z.B. Trommeltrockner, Bandtrockner o.ä. Das Abgas 19 wird dann in die Brennkammer 1 zurückgeführt, was zu Energieeinsparungen führt.

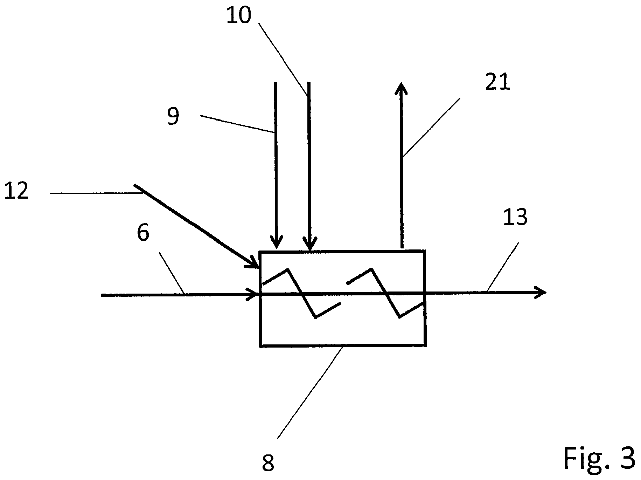

Fig. 3 zeigt die Verfahrensstufe nasschemische Behandlung schematisch. Der unbehandelte anorganische Abfall beispielsweise die Flugasche 6 aus dem Verbrennungsprozess, thermischen, chemischen, mechanischen Prozess wird einer nasschemischen Behandlung zugeführt. Hier wird vorteilhafterweise ein Mischer/Kneter 8 eingesetzt, der gasdicht ausgeführt ist. Es werden insbesondere Wasser 9 und alkalisch wirkende Reaktionsmittel wie z.B. Base, Lauge, Nitrat, Wasserglas oder auch industrielle alkalische Abfallstoffe (z.B. Rotschlamm) 10 zugegeben. Dieser Behandlungsschritt arbeitet mit alkalischen Bedingungen, da im sauren Milieu der Gesamtgehalt an gelösten Feststoffen durch teilweises Aufschließen der mineralischen Abfall-/Aschematrix sich stark erhöhen kann und infolgedessen ohne einen weiteren Behandlungsschritt die Abfall-/Aschequalität durch diese Erhöhung hinsichtlich Deponierbarkeit stark verschlechtert wird. Abhängig von der Abfall-/Aschebeschaffenheit ist es erforderlich, ausreichend Wasser für die vollständige Oberflächenbenetzung, Hydratation und Oxidation sowie den Stofftransport bereitzustellen. Zuwenig Wasser kann die Hydratation und Oxidation von unedlen metallischen Phasen gänzlich unterbinden, zuviel Wasser senkt die Hydratations- und Oxidationsgeschwindigkeit stark ab, da notwendige Reaktionswärme zum Aufheizen des überschüssigen Wassers verloren geht.

Durch die Hydratation und Oxidation der unedlen metallischen Phasen werden abhängig von deren Anteil hohe Mengen an gasförmigem Wasserstoff/Ammoniak/Brenngas freigesetzt. Entsprechend muss die Bildung einer explosiblen Atmosphäre im Mischer/Kneter 8 und in seiner unmittelbaren Umgebung durch Gasspülung verhindert werden. Die Menge an zugeführtem Spülgas 12 orientiert sich am Brenngas-Sauerstoff-Verhältnis im Abgas 21, so dass eine explosible Atmosphäre jedenfalls verhindert wird. Es werden Gasüberwachungsmessungen eingesetzt. Das verwendete Spülgas weist vorzugsweise einen niederen, bestenfalls keinen Sauerstoff-Anteil auf. Aus dem Verbrennungsprozess/ thermischen Prozess abgezweigtes Rauchgas/Abgas mit einem möglichst geringen Rest-Sauerstoffanteil kann daher in günstiger Weise eingesetzt werden.

Um einen Gasaustritt in die Umgebung zu verhindern, soll zur weiteren Absicherung im Mischer/Kneter 8 ein Unterdruck mittels eines Saugzugs hergestellt werden. Gaswarnsysteme in der näheren Umgebung des Aggregats dienen der zusätzlichen Sicherheit.

Das Abgas 21 aus dem nasschemischen Behandlungsschritt kann als Rezirkulationsgas dem Verbrennungsprozess wieder zugeführt werden, um das in ihm enthaltene Brenngas im Verbrennungsprozess wieder energetisch nutzen zu können.

Um höchst explosiblen gasförmigen Wasserstoff zu vermeiden, wird bei vorteilhafter Zugabe von Nitrat 11 weit weniger explosionsgefährliches Ammoniak gebildet. Ein weiterer Vorteil des freigesetzten Ammoniaks liegt in der Chlorabscheidung während der nasschemischen Behandlung sowie in seiner Verwendung hinsichtlich Entstickung in Verbrennungsprozessen/thermischen Prozessen sowie als Wertstoff für andere industrielle Prozesse (z.B. Düngemittelindustrie, Zellstoffindustrie, chemische Industrie, etc.).

Das erfindungsgemäße Verwertungsverfahren ist beispielsweise einem Verbrennungsprozess oder anderem thermischen, chemischen, mechanischen Prozess nachgeschaltet und kann als verbundene oder unabhängige Anlage betrieben werden, wobei die technische Notwendigkeit eines Granulier- und/oder Kalzinierschritts von der Produktbeschaffenheit aus der nasschemischen Behandlung hinsichtlich der weiteren Handhabung (Förderung, Lagerung, Entsorgung) abhängig ist.

Die Erfindung ist nicht durch die Zeichnungen und Beschreibung beschränkt. So kann die nasschemische Behandlung separat oder gefolgt von Granulierung und/oder Kalzinierung eingesetzt werden.

## Patentansprüche

1. Verfahren zur Abreicherung von reaktivem, metallischem Aluminium und anderen unedlen metallischen Phasen in Aschen oder Abfällen aus Verbrennungsprozessen oder anderen thermischen, chemischen, mechanischen Prozessen, wobei der Verbrennung oder dem insbesondere thermischen, chemischen, mechanischen Prozess eine vorzugsweise kontinuierliche bzw. quasi-kontinuierliche nasschemische Behandlung zur Hydratation der metallischen Phasen nachgeschaltet ist, wobei die nasschemische Behandlung unter alkalischen Bedingungen mit pH-Werten größer 11 erfolgt und die erforderliche Alkalität von pH größer 11 über gezielte Zugabe in einen Mischer/Kneter von alkalisch wirkenden Reaktionschemikalien wie z.B. Base oder Lauge eingestellt wird, **dadurch gekennzeichnet, dass** Nitrat zugegeben und dadurch Ammoniak anstelle des hoch explosionsgefährlichen Wasserstoffs gebildet wird.

2. Verfahren nach Anspruch 1, **dadurch gekennzeichnet, dass** durch das gebildete Ammoniak auch Chlor gebunden und abgeschieden wird, so dass auch eine teilweise Chlorreduktion erfolgt.

3. Verfahren nach einem der Ansprüche 1 bis 2, **dadurch gekennzeichnet, dass** der Wassergehalt in der Aschemischung in Abhängigkeit der Aschebeschaffenheit sowie der erforderlichen Zugabemenge an Reaktionschemikalien eingestellt wird.

4. Verfahren nach einem der Ansprüche 1 bis 2, **dadurch gekennzeichnet, dass** Spülgas im Mischer/Kneter der nasschemischen Behandlung im Unterdruckbetrieb eingesetzt wird, wobei bei verbundenen Anlagen die Verwendung von Rauchgas/Prozessgas mit keinem oder einem möglichst geringen Sauerstoffanteil besonders zweckmäßig ist.

5. Verfahren nach einem der Ansprüche 1 bis 2, **dadurch gekennzeichnet, dass** Brenngas aus Wasserstoff und/oder Ammoniak freigesetzt und im Abgas energetisch oder prozesstechnisch wieder genutzt wird.

6. Verfahren nach einem der Ansprüche 1 bis 4, **dadurch gekennzeichnet, dass** der nasschemischen Behandlung eine Stückigmachung, beispielsweise Granulierung, nachgeschaltet ist, welche ein unkontrolliertes Abbinden von nasschemisch aktivierten mineralischen Bindemittelphasen durch Formgebung und -Festigkeit verhindern soll.

7. Verfahren nach einem der Ansprüche 1 bis 6, **dadurch gekennzeichnet, dass** der nasschemischen Behandlung eine Kalzinierung zur Entfrachtung des beigemengten Wassers und Verhinderung von schädlichen, nasschemisch bedingten Nebenreaktionen nachgeschaltet ist.

8. Verfahren nach Anspruch 1, **dadurch gekennzeichnet, dass** die Alkalität über alkalische wirkende Reaktionschemikalien wie Wasserglas oder auch industrielle alkalische Abfallstoffe, z.B. Rotschlamm, oder Nitrat eingestellt wird.

## Claims

1. Method for removing reactive, metallic aluminium and other base metallic phases in ash or waste material from combustion processes or other thermal, chemical, mechanical processes, where combustion or, in particular, the thermal, chemical, mechanical process is followed preferably by continuous or quasi-continuous, wet chemical treatment to hydrate the metallic phases, where wet chemical treatment takes place under alkaline conditions with pH-values of more than 11 and the necessary alkalinity at a pH of more than 11 is set by means of precise addition of reaction chemicals with an alkaline effect, such as base or lye, in a mixer/kneader, **characterised in that** nitrate is added and, as a result, ammonia is formed instead of the highly explosive hydrogen.

2. Method according to Claim 1, **characterised in that** chlorine is also bound and removed by the ammonia formed, with the result that there is also some reduction in chlorine content.

3. Method according to one of Claims 1 to 2, **characterised in that** the water content in the ash mix is set according to the ash properties and the necessary amount of reaction chemicals to be added.

4. Method according to one of Claims 1 to 2, **characterised in that** flushing gas is used under vacuum in the mixer/kneader for wet chemical treatment, where the use of flue/process gas with no or as little oxygen content as possible is particularly useful in the plants connected to it.

5. Method according to one of Claims 1 to 2, **characterised in that** fuel gas consisting of hydrogen and/or ammonia is released and reused in the exhaust to generate energy or in the process itself.

6. Method according to one of Claims 1 to 4, **characterised in that** the wet chemical treatment is followed by a fragmenting process, for example granulation, which is intended to prevent uncontrolled setting of mineral bonding agent phases that have been activated in a wet chemical process by giving them shape and strength.

7. Method according to one of Claims 1 to 6, **characterised in that** wet chemical treatment is followed by calcination in order to remove the water added and prevent harmful side reactions as a result of wet chemical treatment.

8. Method according to Claim 1, **characterised in that** the alkalinity is set by means of reaction chemicals with an alkaline effect such as soluble glass or also industrial, alkaline waste substances, e.g. red mud, or nitrate.

## Revendications

1. Procédé d'appauvrissement d'aluminium métallique réactif et d'autres phases métalliques communes dans des cendres ou des déchets provenant de processus de combustion ou d'autres processus mécaniques, chimiques, thermiques, un traitement chimique par voie humide quasi-continue ou de préférence continue pour hydrater les phases métalliques ayant lieu en aval de la combustion ou le processus chimique, en particulier thermique, le traitement chimique par voie humique se produisant dans des conditions alcalines avec des valeurs de pH supérieures à 11 et l'alcalinité nécessaire de pH supérieure à 11 par ajout ciblé dans un mélangeur/malaxeur de produits chimiques réactifs à effet alcalin par exemple une base ou une solution alcaline, **caractérisé en ce que** du nitrate est ajouté et de l'ammoniac est ainsi formé à la place de l'hydrogène hautement inflammable.

2. Procédé selon la revendication 1, **caractérisé en ce que** l'ammoniac obtenu permet de lier et d'isoler le chlore de telle sorte qu'une réduction partielle de chlore se produise.

3. Procédé selon l'une des revendications 1 à 2, **caractérisé en ce que** la teneur en eau dans le mélange de cendre est ajustée en fonction de la qualité de cendre et de la quantité ajoutée nécessaire de produits chimiques réactifs.

4. Procédé selon l'une des revendications 1 à 2, **caractérisé en ce que** le gaz de balayage est employé dans le mélangeur/malaxeur du traitement chimique par voie humide opérant à basse pression, dans des installations reliées l'utilisation de gaz de fumée/gaz de processus sans oxygène ou une proportion d'oxygène aussi faible que possible, est particulièrement avantageuse.

5. Procédé selon l'une des revendications 1 à 2, **caractérisé en ce que** le gaz de combustion se dégage de l'hydrogène et/ou de l'ammoniac et est réutilisé dans le gaz d'échappement à des fins énergétiques ou techniques.

6. Procédé selon l'une des revendications 1 à 4, **caractérisé en ce qu'**une agglomération, par exemple une granulation, se produit en aval du traitement chimique par voie humide, qui devrait rendre impossible la prise non contrôle de phases liantes minérales activées chimiquement par voie humide par formage et stabilité de forme.

7. Procédé selon l'une des revendications 1 à 6, **caractérisé en ce qu'**une calcination pour éliminer l'eau ajoutée et pour rendre impossible des réactions parallèles dommageables dues au traitement chimique par voie humide, se produit en aval du traitement chimique par voie humide.

8. Procédé selon la revendication 1, **caractérisé en ce que** l'alcalinité est ajustée au moyen de produits chimiques réactifs à effet alcalin comme le silicate de soude ou également des produits résiduaires alcalins, par exemple, de la boue rouge ou du nitrate.
